# EUROPÄISCHE PATENTSCHRIFT

(11) **EP 2 210 463 B1**
(45) Veröffentlichungstag und Bekanntmachung des Hinweises auf die Patenterteilung: **22.06.2011**
(21) Anmeldenummer: 10401009.5
(22) Anmeldetag: 19.01.2010
(51) Int. Cl.: A01C 5/06, A01C 7/20

(54) **Tiefenführungsscheibe mit gekrümmten und gegen Drehrichtung weisenden Stegen**
Depth control disc with stripes curved opposing the direction of rotation
Disque d'insertion en profondeur doté d'arêtes curvées dans le inverse du sens de rotation

(30) Priorität: 22.01.2009 DE 102009005660
(43) Veröffentlichungstag der Anmeldung: 28.07.2010
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Goretzko, Robert, 28201 Bremen (DE); Häfker, Gerd, 27305 Süstedt (DE)

(56) Entgegenhaltungen:
- EP-A2- 0 916 246
- WO-A1-2008/022373
- GB-A- 190 927 546

## Beschreibung

Die Erfindung betrifft ein Scheibensäschar gemäß des Oberbegriffes des Anspruches 1.

Ein derartiges Scheibensäschar ist beispielsweise in der EP 09 162 46 B1 beschrieben. Der Tragkörper der Tiefenführungsscheibe dieses Scheibensäschares ist einerseits nicht ausreichend tragfähig und andererseits ist die Walkfähigkeit der aus flexiblem Material bestehenden Tiefenführungsscheibe nicht ausreichend, so dass zuviel Erdreich an der Tiefenführungsscheibe, insbesondere bei feuchten und nassen Einsatzbedingungen anhaftet.

Der Erfindung liegt die Aufgabe zugrunde, eine ausreichend tragfähige Tiefenführungsscheibe mit einer ausreichenden Selbstreinigung, auch unter schwierigen Einsatzbedingungen, zu schaffen.

Diese Aufgabe wird erfindungsgemäß durch die kennzeichnenden Merkmale des Patentanspruches 1 gelöst. In Folge dieser Maßnahme ergeben sich durch die strahlenförmigen, streifenartigen Tragstege einerseits eine ausreichende Tragfähigkeit zur ausreichenden und guten Tiefenführung des Scheibensäschares.

Durch die gekrümmte Ausgestaltung der Tragstege wird die Grundvoraussetzung dafür geschaffen, sie sicherartig ausgestalten zu können. Weiterhin wird hierdurch eine möglichst große Fläche gegen die Fahrtrichtung geschaffen, dass die Tiefenführungsscheibe sicher auf der Bodenfläche abrollt und einen ausreichenden Widerstand auf dem Boden findet um die Säscheibe in ausreichender Gleichmäßigkeit und Tiefe zu führen. Außerdem wird die Erde nach dem Austreten und dem Abheben vom Boden nur wenig hoch geworfen.

Um eine möglichst gute sichelartige Ausgestaltung der Tragstäbe mit einer ausreichend großen Tragfläche zu erhalten ist vorgesehen, dass eine an den äußeren radialen Endbereich des Tragsteges und an dessen Krümmung angelegte Tangente einen Winkel zwischen 5° und 35°, vorzugsweise 20° zur durch den Berührungspunkt der Tangente an dem Tragsteg verlaufenden Radialen einschließt.

Eine weitere Verbesserung der Ausgestaltung des Tragsteges ergibt sich dadurch, dass eine an den äußeren mittleren Bereich des Tragsteges und an dessen Krümmung angelegte Tangente zumindest annähernd mit der durch den Berührungspunkt der Tangente an dem Tragsteg verlaufenden Radialen zusammenfällt. Hierdurch lassen sich in geschickter Weise relativ viele sichelartige gekrümmte Tragstege auf einer relativ kleinen Tiefenführungsscheibe unterbringen.

Um eine möglichst gleichmäßige Ausgestaltung der Tragstege zu erreichen, ist vorgesehen, dass die Breite der Zwischenräume zwischen einander benachbarten Tragstegen von innen nach außen zunimmt. So ergeben sich in radialer Richtung ach außen öffnende Zwischenräume

Damit sich nach außen öffnende Zwischenbereiche zwischen einander benachbarten Tragstegen ergeben und die Erde leicht nach außen aus den Zwischenräumen zwischen den Tragstegen herausfallen kann, damit sich kein Erdkranz um die Tiefenführungsscheibe und auf der Tiefenführungsscheibenfläche bilden kann, ist vorgesehen, dass die Breite der Zwischenräume zwischen einander benachbarten Tragstegen von innen nach außen zunimmt.

Vorteilhaft erstrecken sich die Tragstege bis zum radialen Außenumfang der Tiefenführungsscheibe um so eine möglichst gute Tiefenführung zu erreichen.

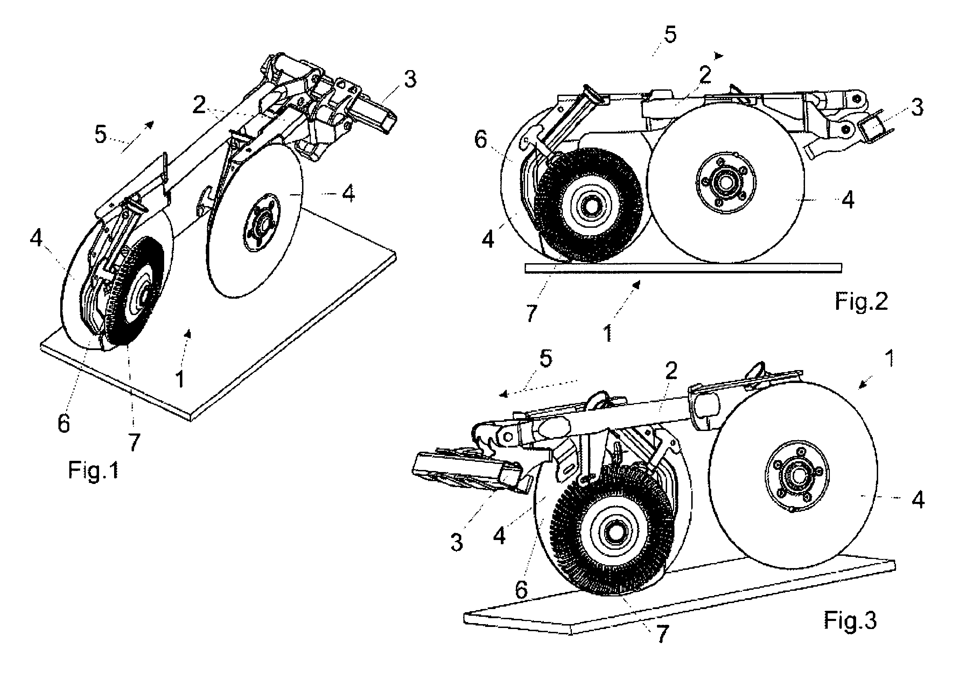

Weitere Einzelheiten der Erfindung sind der Beispielsbeschreibung und den Zeichnungen zu entnehmen. Hierbei zeigen
- Fig.1: die Anordnung zweier Säschare in beabstandeter Weise zu einander und in zwei Querreihen hintereinander als ausschnittsweise Darstellung der Scharanordnung einer Sämaschine in perspektivischer Darstellung,
- Fig.2: die Säscharanordnung gemäß Fig.1 in Seitenansicht
- Fig.3: die Säscharanordnung gemäß Fig.1 in einem anderen perspektivischen Darstellung,

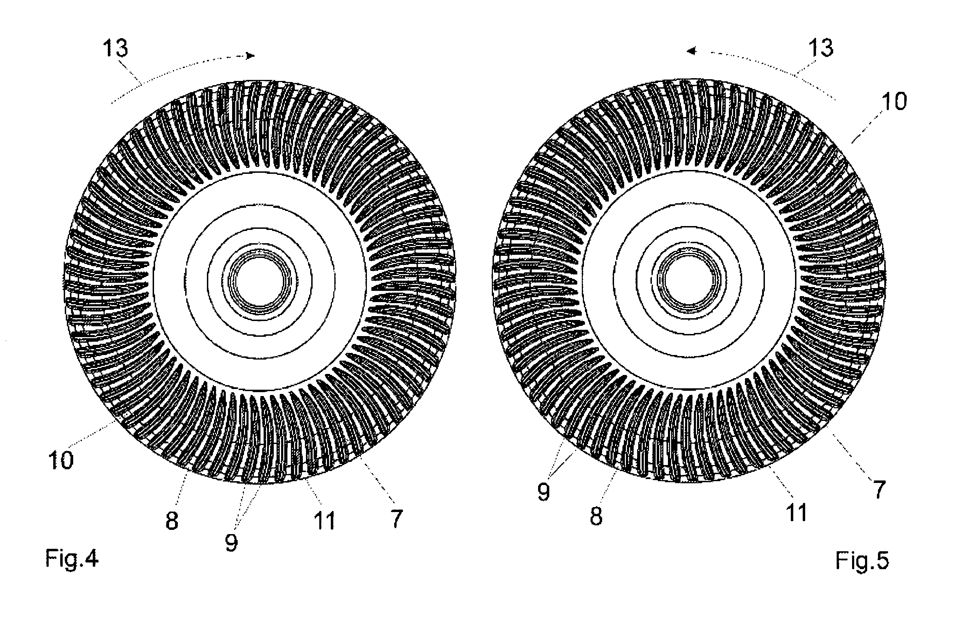

- Fig.4: die in Fahrtrichtung linke Tiefenführungsscheibe in perspektivischer Darstellung in der Ansicht von außen,
- Fig.5: die in Fahrtrichtung rechte Tiefenführungsscheibe in perspektivischer Darstellung in der Ansicht von außen,

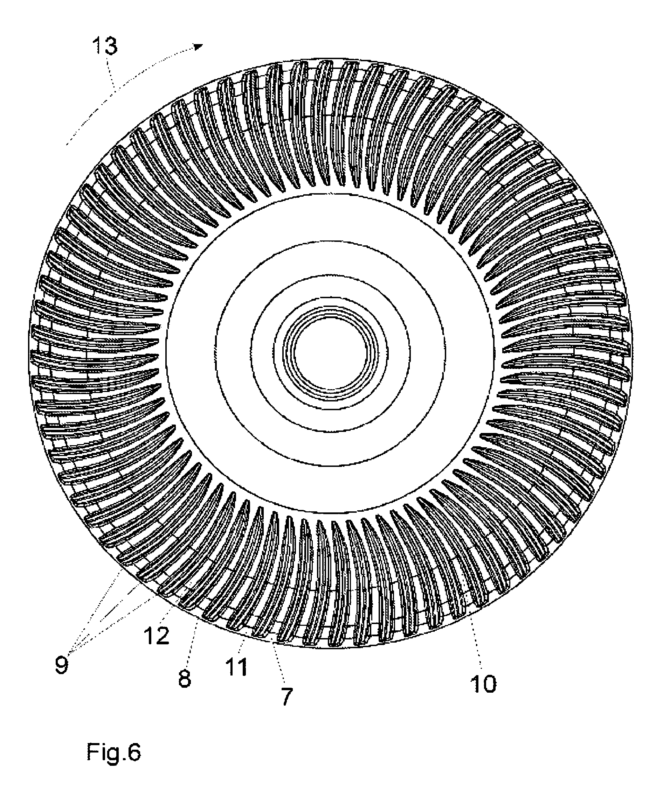

- Fig.6: eine vergrößerte Darstellung der Scheibe nach Fig. 4 und

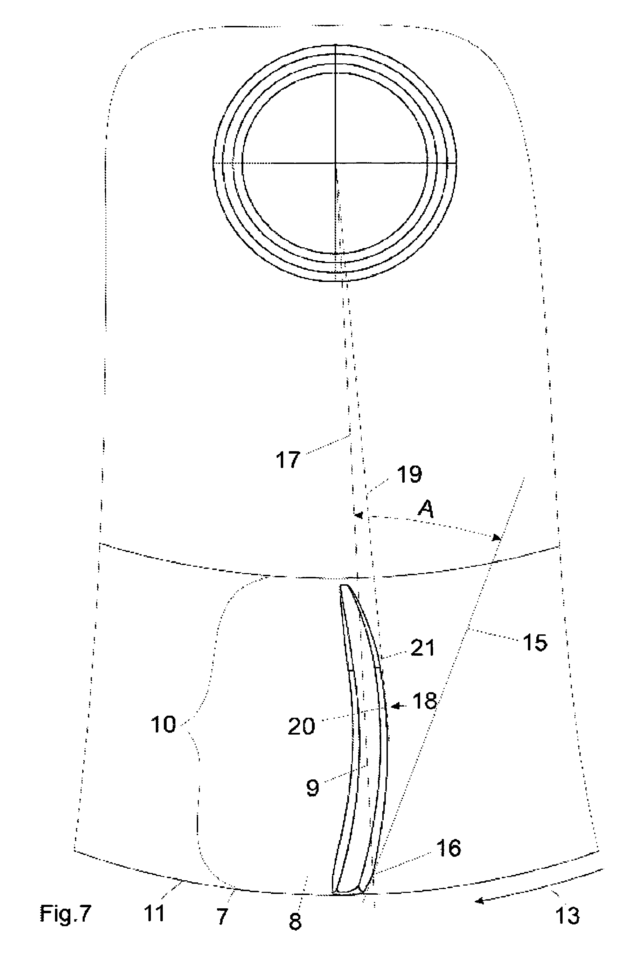

- Fig.7: einen vergrößerten Ausschnitt der Scheibe nach Fig. 4 mit einem Tagsteg und eingezeichneten Krümmungserkmalen.

Das Scheibensäschar 1 ist mittels einer Scharhalterung 2 in aufrechter Ebene bewegbar an der ausschnittsweise dargestellten Scharschiene 3 eines nicht dargestellten Rahmens einer Sämaschine angeordnet. Das Scheibensäschar 1 weist eine Scharscheibe 4 auf, die jeweils winklig gegenüber der vertikalen und zur Fahrtrichtung 5 schräg angestellt ist. Die Scharscheibe 4 ist mittels eines Drehlagers an der Scharhalterung 2 drehbar gelagert. Des weiteren ist der Scharscheibe 4 in Fahrtrichtung 5 gesehen, eine auf der Schattenseite 6 der Scharscheibe 4 angeordnet und entgegengesetzt zur Scharscheibe 4 geneigte, sowie drehbar gelagerte und aus einem flexiblen Material bestehende Tiefenführungsscheibe 7 zugeordnet. Diese Tiefenführungsscheibe 7 weist auf der äußeren Scheibenebene 8, die der Scharscheibe 4 abgewandt ist, aus der äußeren Scheibenebene 8 herausragende Tiefenführungselemente 9 auf.

Diese auf der Außenseite 8 der Tiefenführungsscheibe 7 angeordnete Tiefenführungselemente 9 sind in einem radial äußeren Ringbereich 10 der Tiefenführungsscheibe 7 als strahlenförmig und streifenartig ausgebildete Tragstege ausgestaltet. Diese Tragstege 9 sind beabstandet zueinander angeordnet. Die Tragstege 9 erstrecken sich bis zum radialen Außenumfang 11 der Tiefenführungsscheibe 7, wie die Zeichnungen zeigen. Der Abstand zwischen den Tragstegen 9 kann der Breite der Tragstege 9 entsprechen.

Die gesamte Tiefenführungsscheibe 7 ist aus einem Kunststoffmaterial hergestellt. Hierdurch weist sie eine entsprechende Flexibilität bereits aufgrund der Materialeigenschaften auf.

Die Tragstege sind auf der Außenseite der Tiefenführungsscheibe angeordnet und zumindest in ihrem radialen äußeren Ringbereich 10 strahlenförmig und streifenartig ausgestaltet und jeweils beabstandet zueinander angeordnet. Zwischen den einzelnen Tragstegen 9 befindet sich der Zwischenraum 12. Die Tragstege 9 sind zumindest in ihrem äußeren radialen Bereich entgegen der Drehrichtung 13 der Scheibe 7 gekrümmt ausgerichtet. Insgesamt weisen die Tragstege 9 einen gegen die Drehrichtung 13 der Tiefenführungsscheibe gekrümmte Ausrichtung auf.

Im Folgenden wir die Krümmung und Ausrichtung der jeweils der Fahrtrichtung zugewandeten Seite der Tragstege näher beschrieben:

Eine an den äußeren radialen Engbereich 14 des Tragsteges 9 und an dessen Krümmung angelegte Tangente 15 schließt einen Winkel zwischen 5° und 35°, vorzugsweise 20° zu einer durch den Berührungspunkt 16 der Tangente 15 an dem Tragsteg 9 verlaufenden Radialen 17 ein. Weiterhin fällt eine an den äußeren mittleren Bereich 18 des Tragsteges 9 und an dessen Krümmung angelegte Tangente 19 zumindest annähernd mit der durch den Berührungspunkt 20 der Tangente 19 an dem Tragsteg 9 verlaufenden Radialen 21 zusammen.

Die Breite der Tragstege 9 nimmt von außen nach innen zu. Weiterhin nimmt die Breite der Zwischenräume 12 zwischen einander benachbarten Tragstegen 9 von innen nach außen zu, so dass sich der Zwischenraum 12 zwischen den einander benachbarten Tragstegen 9 jeweils in radialer Richtung nach außen erweitert. Hierdurch öffnen sich die Zwischenräume 12 nach außen, somit kann die Erde leichter aus den Zwischenräumen 12 zwischen den Tragstegen 9 herausfallen.

Die Tragstege 9 sind sichelartig ausgebildet. Hierdurch wird eine vergrößerte Tragfläche der Tragstege gegen die Fahrtrichtung 5 geschaffen. Dies erhöht die Sicherheit einer genauen Tiefenführung.

Um die Tiefenführungsscheibe 7 bei ihrer Flexibilität eine ausreichend große Stabilität zu geben, können auf der Innenseite der Tiefenführungsscheibe 7 in abgestufter Weise ringförmig angeordnete strahlenförmige bzw. streifenartige Noppen oder Verrippungen angeordnet sein.

## Patentansprüche

1. Scheibensäschar (1) mit einer Scharhalterung (2), an der eine jeweils winkelig gegenüber der Vertikalen und zur Fahrtrichtung angestellte und drehbar gelagerte Scharscheibe (4) und eine auf der Schattenseite (6) der Scharscheibe (4) und entgegengesetzt zur Scharscheibe (4) geneigte sowie drehbar gelagerte und aus einem flexiblem Material bestehende Tiefenführungsscheibe (7) mit aus der äußeren Scheibenebene (8) herausragenden Tiefenführungselementen (7) angeordnet sind, **dadurch gekennzeichnet, dass** auf der Außenseite der Tiefenführungsscheibe (7) zumindest in deren radialen äußeren Ringbereich (10) strahlenförmige, streifenartige Tragstege (9) beabstandet zueinander angeordnet sind, dass die Tragstege zumindest in ihrem äußeren radialen Bereich entgegen der Drehrichtung (13) gekrümmt ausgerichtet sind.

2. Scheibensäschar nach Anspruch 1, **dadurch gekennzeichnet, dass** eine an den äußeren radialen Endbereich des Tragsteges (9) und an dessen Krümmung angelegte Tangente (15) einen Winkel zwischen 5° und 35°, vorzugsweise 20° zur durch den Berührungspunkt (16) der Tangente (15) an dem Tragsteg (9) verlaufenden Radialen einschließt.

3. Scheibensäschar nach Anspruch 1, **dadurch gekennzeichnet, dass** eine an den äußeren mittleren Bereich (18) des Tragsteges (9) und an dessen Krümmung angelegte Tangente (19) zumindest annähernd mit der durch den Berührungspunkt (20) der Tangente (19) an dem Tragsteg (9) verlaufenden Radialen (21) zusammenfällt.

4. Scheibensäschar nach Anspruch 1, **dadurch gekennzeichnet, dass** die Breite der Tragstege (9) von innen nach außen zunimmt.

5. Scheibensäschar nach Anspruch 1, **dadurch gekennzeichnet, dass** die Breite der Zwischenräume (12) zwischen einander benachbarten Tragstegen (9) von innen nach außen zunimmt.

6. Scheibensäschar nach Anspruch 1, **dadurch gekennzeichnet, dass** die Tragstege (9) sich bis zum radialen Außenumfang (11) der Tiefenführungsscheibe (7) erstrecken.

## Claims

1. Disc-type sowing coulter (1) having a coulter holder (2), on which are disposed a rotatably mounted coulter disc (4), which is placed in each case at an angle in relation to the vertical and to the direction of travel, and a rotatably mounted depth-guiding disc (7), which is on the blind side (6) of the coulter disc (4), inclined in opposition to the coulter disc (4), produced from a flexible material and has depth-guiding elements (9) that protrude from the outer disc plane (8), **characterized in that** on the outside of the depth-guiding disc (7), at least in its radial outer ring region (10), ray-shaped, strip-like support webs (9) are disposed spaced apart from each other, **in that** the support webs, at least in their outer radial region, are aligned in a curved manner in opposition to the direction of rotation (13).

2. Disc-type sowing coulter according to Claim 1, **characterized in that** a tangent (15) applied to the outer radial end region of the support web (9) and to its curvature encloses an angle of between 5° and 35°, preferably 20° to the radial that extends through the point of contact (16) of the tangent (15) on the support web (9).

3. Disc-type sowing coulter according to Claim 1, **characterized in that** a tangent (19) applied to the outer central region (18) of the support web (9) and to its curvature coincides at least approximately with the radial (21) that extends through the point of contact (20) of the tangent (19) on the support web (9).

4. Disc-type sowing coulter according to Claim 1, **characterized in that** the width of the support webs (9) increases from inside to outside.

5. Disc-type sowing coulter according to Claim 1, **characterized in that** the width of the spaces (12) between adjacent support webs (9) increases from inside to outside.

6. Disc-type sowing coulter according to Claim 1, **characterized in that** the support webs (9) extend as far as the radial outer circumference (11) of the depth-guiding disc (7).

## Revendications

1. Soc de charrue en forme de disque (1) comportant un support de soc (2) auquel sont fixés respectivement un disque formant soc (4) disposé incliné par rapport à la direction verticale et à la direction de déplacement et monté à rotation, ainsi qu'un disque de guidage en profondeur (7) en un matériau souple, monté à rotation et incliné sur le côté intérieur (6) du disque formant soc (4) et de façon opposée à ce disque (4) et il comporte des éléments de guidage en profondeur (7), en saillie du coté extérieur (8) du disque,
soc de charrue en forme de disque **caractérisé en ce que**
le côté extérieur du disque de guidage en profondeur (7) comporte au moins dans sa zone annulaire radiale extérieure (10), des nervures (9) en forme de bandes radiales, et au moins dans leur zone radiale extérieure, les nervures sont courbées dans le sens opposé au sens de rotation (13).

2. Soc en forme de disque selon la revendication 1,
**caractérisé en ce qu'**
une tangente (15) appliquée à la zone d'extrémité radiale extérieure de la nervure de support (9) contre sa courbure, fait un angle compris entre 5° et 35° et de préférence un angle de 20° par rapport à la direction radiale passant par le point de contact (16) de la tangente (15) à la nervure de support (9).

3. Soc en forme de disque selon la revendication 1,
**caractérisé en ce qu'**
une tangente (19) appliquée contre la zone médiane extérieure (18) de la nervure de support (9) à sa courbure, coïncide au moins sensiblement avec la direction radiale (21) passant par le point de contact (20) de la tangente (19) contre la nervure de support (9).

4. Soc en forme de disque selon la revendication 1,
**caractérisé en ce que**
la largeur de la nervure de support (9) augmente de l'intérieur vers l'extérieur.

5. Soc en forme de disque selon la revendication 1,
**caractérisé en ce que**
la largeur des intervalles (12) entre les nervures adjacentes (9) augmente de l'intérieur vers l'extérieur.

6. Soc en forme de disque selon la revendication 1,
**caractérisé en ce que**
les nervures de support (9) arrivent jusqu'à la périphérie radiale extérieure (11) du disque de guidage en profondeur (7).
